# EUROPÄISCHE PATENTSCHRIFT

(11) **EP 0 734 490 B1**
(45) Veröffentlichungstag und Bekanntmachung des Hinweises auf die Patenterteilung: **17.05.2000**
(21) Anmeldenummer: 95929004.0
(22) Anmeldetag: 31.08.1995
(51) Int. Cl.: F02D 41/18, F02D 41/04, F02D 41/32

(54) **EINRICHTUNG ZUR LASTERFASSUNG MIT HÖHENADAPTION**
ADAPTATION DEVICE FOR LOAD DETECTION WITH ALTITUDE
DISPOSITIF POUR DETECTER UNE CHARGE AVEC ADAPTATION ALTIMETRIQUE

(30) Priorität: 24.09.1994 DE 4434265
(43) Veröffentlichungstag der Anmeldung: 02.10.1996
(73) Patentinhaber: ROBERT BOSCH GMBH, 70442 Stuttgart (DE)
(72) Erfinder: MEZGER, Werner, D-74246 Eberstadt (DE); BÖTTCHER, Klaus, D-71739 Oberriexingen (DE); HELING, Günther, D-71254 Ditzingen (DE)
(86) Internationale Anmeldenummer: DE9501167
(87) Internationale Veröffentlichungsnummer: WO9609466

(56) Entgegenhaltungen:
- EP-A- 0 477 919
- WO-A-91/02225
- DE-A- 4 112 540
- DE-A- 4 322 281
- GB-A- 2 181 570
- US-A- 4 773 375

## Beschreibung

### Stand der Technik

Die Erfindung geht aus von einer Einrichtung zur Lasterfassung mit Höhenadaption nach der Gattung des Hauptanspruchs.

Zur Erfassung der Last einer Brennkraftmaschine wird üblicherweise die angesaugte Luftmasse mit Hilfe eines Hitzdraht- oder eines Heißfilmluftmassenmessers ermittelt.

In gewissen Betriebsbereichen treten bei einer Brennkraftmaschine Pulsationen der Ansaugluft auf, diese können zu einer Verfälschung der vom Luftmassenmesser gelieferten Meßwerte führen. Dies ist insbesondere dann der Fall, wenn es im vollastnahen Bereich zu einer Rückströmung kommt und der Luftmassenmesser die Strömungsrichtung nicht unterscheiden kann und die wegströmende Luft fälschlicherweise als angesaugte Luft registriert.

Damit auch während des Auftretens von Rückströmung eine zuverlässige Lasterfassung möglich ist, könnte beispielsweise ausgehend aus der Drehzahl der Brennkraftmaschine und dem Drosselklappenwinkel ein zweites Lastsignal ermittelt, das sogenannte Nebenlastsignal. Wenn vom Steuergerät erkannt wird, daß ein Betriebszustand vorliegt, in dem Rückströmung auftreten könnte, wird für die Regelung der Brennkraftmaschine nicht das Hauptlastsignal sondern das Nebenlastsignal herangezogen. Das Nebenlastsignal muß jedoch einer Höhenadaption unterzogen werden, da es im Gegensatz zum Hauptlastsignal nicht von der Dichte der angesaugten Luft und damit nicht von der Höhe abhängt.

Würde eine solche Höhenadaption des Nebenlastsignales nicht durchgeführt, würden beim Umschalten zwischen Haupt- und Nebenlastsignal Lastsprünge auftreten, sobald sich die Brennkraftmaschine bzw. das von ihr angetriebene Fahrzeug in einer Höhe befindet, die nicht einer Standardhöhe entspricht.

Bei heute eingesetzten Systemen wird im Rückströmbereich das Hauptlastsignal über eine drehzahlabhängige Kennlinie begrenzt, diese Begrenzung wird auch noch höhenkorrigiert.

Bei Einrichtungen zur Lasterfassung bei einer Brennkraftmaschine, die beispielsweise in den Patentanmeldungen DE-P 43 22 281 oder DE-P 43 36 813 beschrieben werden, wird vorgeschlagen, eine Höhenadaption für das Nebenlastsignal durchzuführen, indem die Differenz zwischen dem Hauptlastsignal und dem Nebenlastsignal bei Betriebsbedingungen, bei denen mit Sicherheit keine Rückströmung auftreten kann, gebildet wird und ausgehend von dieser Differenz, die nur abhängig von der Höhe bzw. der Dichte sein kann, wird die Höhenadaption durchgeführt. Dazu wird wie in der DE-P 43 22 281 beschrieben wird, das gefilterte Nebenlastsignal vom ebenfalls gefilterten Hauptlastsignal abgezogen, die Differenz führt zu einem Adaptionswert, der ein Maß für die geänderte Dichte darstellt. Das Vergleichsergebnis wird dann bei bestimmten Betriebsbedingungen an einen Integrator weitergeleitet und in diesen Integrator aufintegriert.

Dieser Integrator arbeitet mit zwei unterschiedlichen Zeitkonstanten. In den Kennfeldbereichen, in denen eine Adaption und damit ein Lernen des Höhenfaktors möglich ist, läuft dieser Lernvorgang hauptsächlich mit einer relativ langsamen Zeitkonstanten des Integrators. Es wird ein Kompromiß zwischen ausreichend hoher Lerngeschwindigkeit und Signalruhe gesucht. Wenn jedoch der Adaptionsbereich verlassen wird, besteht die Gefahr, daß eine größere Höhendifferenz zurückgelegt werden kann, ohne daß die Höhe gelernt wurde. Um bei erneutem Lernbetrieb, d.h. bei Wiedereintritt in den Adaptionsbereich ein relativ schnelles Lernen zu ermöglichen, wird dann kurzfristig auf die schnelle Adaptionszeitkontanste des Integrators umgeschaltet. Das Umschaltkriterium zwischen den beiden Zeitkonstanten wird beispielsweise über die Länge einer gefahrenen Schubphase gesteuert. Nach erneutem Lernen wird die schnelle Zeitkonstante für eine applizierbare Zeit zugelassen und anschließend wieder auf die langsame Zeitkonstante zurückgeschaltet.

Diese aus der DE-P 43 22 281 bekannte Umschaltung zwischen zwei festen Integratorzeitkonstanten für die Adaption kann unter Umständen ungünstig sein. Außerdem hat das bekannte System den Nachteil, daß nicht geprüft wird, ob die gelernte Höhe tatsächlich auch noch aktuell ist.

Aus der WO-A-91 02 225 ist ein Verfahren zur Meßfehlerkorrektur eines Heißfilm-Luftmassenmessers bekannt, bei dem es primär darum geht, die durch Pulsationen der Luftmasse verursachten Meßfehler zu kompensieren. Dazu wird das sogenannte Hauptlastsignal, das mit Hilfe eines Luftmassenmessers gewonnen wird und das sogenannte Nebenlastsignal, das aus dem Drosselklappenwinkel und der Drehzahl der Brennkraftmaschine berechnet wird, miteinander verglichen und die Differenz der beiden Signale wird mit Hilfe eines Integrators mit vorgebbarer Zeitkonstante aufintegriert. Da das Hauptlastsignal höhenabhängig ist und das Nebenlastsignal von der Höhe, auf der sich die Brennkraftmaschine befindet, unabhängig ist, läßt sich das Ergebnis der Integration auch zur Höhenkorrektur verwenden.

### Vorteile der Erfindung

Die erfindungsgemäße Einrichtung mit den Merkmalen des Anspruchs 1 hat demgegenüber den Vorteil, daß eine optimalere Anpassung an die vorliegenden Gegebenheiten möglich ist. Durch Einführung einer variablen Zeitkonstante für den Integrator kann die Höhenadaption in Abhängigkeit vom maximal möglichen Höhenfehler durchgeführt werden, dies führt zum einen zu einer sehr schnellen Adaption beim Vorliegen großer Abweichungen zwischen der tatsächlichen und der angenommenen Höhe. Gleichzeitig ist eine Aussage über die Genauigkeit bzw. den maximal möglichen Fehler des Höhenfaktors möglich und es ist in einer vorteilhaften Ausgestaltung auch noch möglich, zu erkennen, ob die gelernte Höhe tatsächlich noch aktuell ist.

Weitere Vorteile der erfindungsgemäßen Einrichtung ergeben sich durch die in den Unteransprüchen angegebenen Maßnahmen. Dabei ist besonders vorteilhaft, daß die Zeitkonstante über eine vorgebbare Rampe kontinuierlich in Richtung eines schnelleren Grenzwertes veränderbar ist.

### Zeichnung

Ein Ausführungsbeispiel der Erfindung ist in der Zeichnung dargestellt und wird in der nachfolgenden Beschreibung näher erläutert. Dabei zeigt im einzelnen Figur 1 eine Darstellung, die zeigt wie der Faktor für die Drosselklappen-Höhenadaption ermittelt wird, wobei außerdem Fehlererkennungen ablaufen. Figur 2 verdeutlicht, welche Bedingungen erfüllt sein müssen, daß eine Höhenadaption stattfindet. In Figur 3 ist dargestellt, wie die Bedingung, daß eine gültige Höhenadaption vorliegt, realisiert wird und Figur 4 zeigt den Verlauf des Integrationsfaktors über der Zeit sowie das Vorliegen der Umschaltbedingung für die Höhenadaption ebenfalls über der Zeit.

### Beschreibung des Ausführungsbeispieles

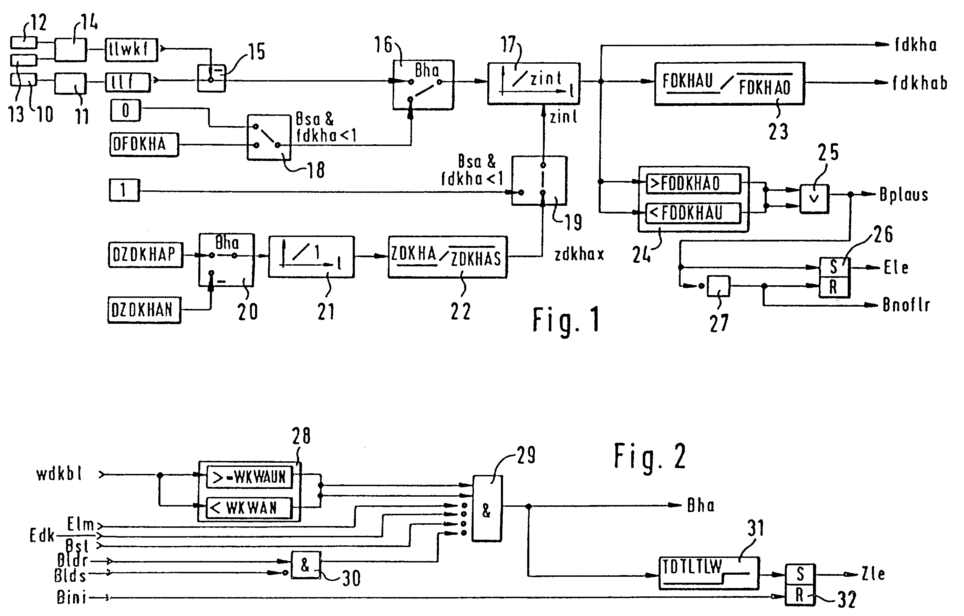

In Figur 1 ist ein Ablaufdiagramm dargestellt, das verdeutlicht, wie aus dem gefilterten Hauptlastsignal tlf und dem gefilterten Nebenlastsignal tlwkf der Adaptionsfaktor fdkha bzw. der begrenzte Adaptionsfaktor fdkhab gebildet wird. Ermittelt wird das gefilterte Hauptlastsignal mit Hilfe eines Luftmassenmessers 10, der die im Saugrohr der Brennkraftmaschine strömende Luft erfaßt. Das Ausgangssignal des Luftmassenmessers 10 wird in der Aufbereitungsschaltung 11 weiter verarbeitet und unter anderem gefiltert.

Das Nebenlastsignal wird ausgehend von der Stellung der Drosselklappe der Brennkraftmaschine sowie der Drehzahl gebildet. Die Stellung der Drosselklappe wird mit Hilfe des Sensors 12 und die Drehzahl mit einem Drehzahlsensor 13 erfaßt, die Aufbereitung der Signale sowie die Verknüpfung zu einem Lastsignal erfolgt mit Hilfe der Schaltungsanordnung 14, in der auch eine Filterung des Nebenlastsignales stattfindet.

Aus dem gefilterten Hauptlastsignal tlf sowie dem gefilterten Nebenlastsignal tlwkf wird im Block 15 die Differenz gebildet, diese Differenz wird über Block 16 dem Integrator 17 zugeführt, wobei die Zuführung nur dann erfolgt, wenn die Bedingung Bha für das Durchführen einer Höhenadaption erfüllt ist. Diese Bedingung Bha wird in Figur 2 näher definiert.

Ist die Bedingung für die Höhenadaption nicht erfüllt, wird die in Block 15 gebildete Differenz nicht weitergeleitet, es erfolgt eine Umschaltung in Block 16. Es wird dann dem Integrator 17 entweder ein A-Faktor für die Höhenadaption DFDKHA zugeführt oder es wird auf Null umgeschaltet, wobei die Bedingung für eine Umschaltung in Block 18 so vorgegeben ist, daß bei erkanntem Schubabschalten Bsa und unter der Voraussetzung, daß der Faktor für die Drosselklappen-Höhenadaption fdkha <1 ist, auf Null geschaltet wird.

Die Zeitkonstante zint des Integrators 17 wird durch die im folgenden beschriebenen Funktionen in geeigneter Weise verändert: Wird die Bedingung Schubabschaltung Bsa erkannt und ist der Faktor für die Drosselklappen-Höhenadaption fdkha <1 wird über Block 19 ein Faktor 1 zum Integrator 17 geführt, es wird also die Zeitkonstante zint mit eins Multipliziert bzw. unverändert gelassen. Wird dagegen entweder keine Schubabschaltung erkannt oder ist der Faktor fdkha nicht <1, schaltet Block 19 um und führt dem Integrator 17 die Zeitkonstante für die Drosselklappen-Höhenadaption zdkhax zu. Diese Zeitkonstante für die Drosselklappen-Höhenadaption wird gebildet aus einer Δ-Zeitkonstante, die in positiver Richtung wirkt (DZDKHAP) oder einer Δ-Zeitkonstante, die in negativer Richtung wirkt (DZDKHAN). Welche Δ-Zeitkonstante weitergeleitet wird, hängt davon ab, ob im Block 20 die Bedingung für die Höhenadaption erfüllt ist oder nicht. Ist sie erfüllt, wird die positive A-Zeitkonstante einem weiteren Integrator 21 zugeführt. In Block 22 wird ausgehend vom Integrationsergebnis in Block 21 eine Begrenzung der Zeitkonstante für die Höhenadaption vorgenommen auf einen Wert ZDKHA für die langsame bzw. ZDKHAS für die schnelle Höhenadaption. Am Ausgang des Blocks 22 wird die bereits erwähnte variable Zeitkonstante für die Drosselklappen-Höhenadaption zdkhax ausgegeben.

Am Ausgang des Integrators 17 entsteht der Faktor fdkha, der als Faktor für die Drosselklappenadapation verwendet wird. Aus dem Ausgangssignale des Integrators 17 wird im Block 23 durch Begrenzung auf einen unteren Grenzwert FDKHAU sowie auf einen oberen Grenzwert FDKHAO ein begrenzter Faktor für die Höhenadaption fdkhab erhalten. Der untere Wert stellt einen unteren Grenzwert für den Faktor zur Höhenadaption dar, der obere einen oberen Grenzwert für den Faktor der Höhenadaption.

Im Block 24 wird geprüft, ob der Faktor für die Drosselklappen-Höhenadaption fdkha größer ist als eine obere Plausibilitätsgrenze für den Faktor der Höhenadaption FDDKHO und es wird geprüft, ob er kleiner ist als eine untere Plausibilitätsgrenze für den Faktor der Höhenadaption FDDKHAU. Diese Plausibilitätsgrenzen sind üblicherweise Festwerte, die in einem Speicher des Steuergerätes abgelegt sind.

Ist eine der in Block 24 überprüften Bedingungen erfüllt, wird am Ausgang der ODER-Stufe 25 die Bedingung Bplaus erfüllt und es wird auf einem unplausiblen Wert für den Faktor zur Drosselklappen-Höhenadaption erkannt.

Diese Bedingung wird dem Seteingang SE eines R-S-Flip-Flops 26 zugeführt, an dessen Ausgang ein Fehlersignal Ele für die Lasterfassung abgegeben wird. Dem Reseteingang R dieses Flip-Flops 26 wird das in Block 27 negierte Ausgangssignal der ODER-Stufe 25 zugeführt. Vom Ausgang des Blocks 27 wird die Bedingung Diagnosefunktion mit in Ordnung-Meldung beendet abgegeben.

Die Bedingung Bha, bei deren Erfüllung eine Höhenadaption stattfindet, wird nach dem in Figur 2 angegebenen Schema ermittelt. Es wird dabei der auf Leerlauf bezogene Drosselklappenwinkel wdkbl in Block 28 daraufhin überprüft, ob er größer ist als eine untere Grenze für den Drosselklappenwinkel für die Nebenlastadaption WKWAUN. Weiterhin wird im Block 28 überprüft, ob der auf Leerlauf bezogene Drosselklappenwinkel wdkbl kleiner ist als eine obere Grenze für den Drosselklappenwinkel für die Nebenlastadaption WKWAN.

Die Ergebnisse dieser beiden Überprüfungen werden je einem Eingang eines UND-Gatters 29 zugeführt, dem außerdem noch Informationen bezüglich eines Fehlers des Hauptlastsensors Elm, eines Fehlers des Drosselklappenpotentiometers Edk, und die Startbedingung Bst zugeführt werden.

Bei einer Brennkraftmaschine mit einem Turbolader wird aus den Bedingungen Ladedruckregelung aktiv Bldr sowie Ladedruckregelung gesteuert Blds in der UND-Stufe 30 ein weiteres Signal gebildet, das ebenfalls zur UND-Stufe 29 gelangt. Die Informationen bezüglich Elm, Edk, Bst sowie das Ausgangssignal der UND-Stufe 30 werden vor ihrer Weiterverarbeitung noch negiert.

Nur wenn alle Bedingungen, die der UND-Stufe 29 zugeführt werden, erfüllt sind, entsteht am Ausgang der UND-Stufe 29 die Bedingung für die Durchführung einer Höhenadaption Bha. Für Brennkraftmaschinen ohne Turbolader ist Bha natürlich ohne die turbospezifischen Bedingungen erfüllt.

In Block 31 wird aus dem Ausgangssignal der UND-Stufe 29 noch eine Zeitdiagnose durchgeführt. Es erfolgt dabei ein Vergleich mit einem Wert TDTLTLW als Zeitdiagnose für die Erkennung eines Fehlers bei dem Vergleich zwischen Hauptlastsignal und Nebenlastsignal. TDTLTLW wirkt als Entprellzeit für Diagnose.

Der Ausgang dieser Zeitdiagnose wird dem Seteingang eines Flip-Flops 32 zugeführt. Dem Reseteingang dieses Flip-Flops wird die Umschaltbedingung Bini, die die Initialisierungsbedingung darstellt, zugeführt. Am Ausgang des Flip-Flops 32 wird ein Signal Zle ausgegeben, das erkennen läßt, daß einmal in einem Fahrzyklus eine Adaption stattgefunden hat.

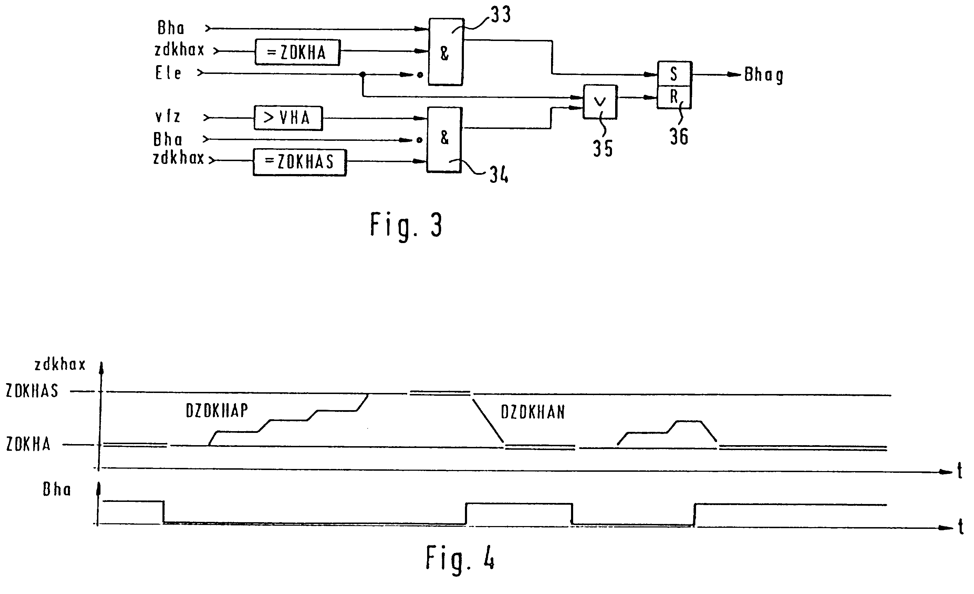

In Figur 3 ist ein Ablaufschema dargestellt, das erkennen läßt, wie die Bedingung, daß die Höhenadaption gültig ist Bhag, gebildet wird. Dazu wird die Bedingung für das Durchführen einer Höhenadaption Bha einer UND-Stufe 33 zugeführt. Dieser UND-Stufe 33 wird weiterhin ein aus der Zeitkonstante der Drosselklappen-Höhenadaption zdkhax gebildeter Wert ZDKHA zugeführt sowie ein Signal Ele, das erkennen läßt, daß die Lasterfassung nicht defekt ist (Ele negiert).

Einer weiteren UND-Stufe 34 wird eine Information zugeführt, ob die Fahrzeuggeschwindigkeit vfz größer ist als ein Grenzwert VHA. Weiterhin wird die Information zugeführt, ob die Bedingung für die Durchführung einer Höhenadaption nicht erfüllt (Bha negiert) ist sowie eine weitere Information, ob die Zeitkonstante für die Drosselklappenadaption zdkhax gleich der Zeitkonstante für die schnelle Höhenadaption nach erkanntem Schub ZDKHAS ist.

Sind diese drei Bedingungen erfüllt, wird ein entsprechendes Signal einer ODER-Stufe 34 zugeführt, der auch noch die Information bezüglich einer Fehlererkennung des Luftmassenmessers zugeführt wird.

Ob die Bedingung für das Vorliegen einer gültigen Höhenadaption Bhag vorliegt, läßt sich am Ausgang des Flip-Flops 35 erkennen. Diesem Flip-Flop 35 wird zum einen das Ausgangssignal der UND-Stufe 31 und zum anderen das Ausgangssignal der ODER-Stufe 34 zugeführt. Dabei erfolgt ein Setzen des Flip-Flops, wenn der Ausgang der UND-Stufe 31 ein positives Signal abgibt, ein Reset erfolgt, wenn am Ausgang der ODER-Stufe 34 ein positiver Impuls abgegeben wird.

Mit den in den Figuren 1 bis 3 aufgezeigten Ablaufdiagrammen läßt sich eine optimierte Höhenadaption durchführen, gleichzeitig sind Aussagen über die Gültigkeit des gelernten Faktors möglich und es lassen sich Fehler erkennen. Der letztendlich gebildete Faktor für die Drosselklappen-Höhenadaption fdkha dient der Anpassung des Nebenlastsignales tlw an die Höhe. Die Adaption erfolgt nur, wenn kein Fehler des Luftmassensensors und kein Fehler des Drosselklappengebers erkannt wird und wenn der auf den Leerlauf bezogene Drosselklappenwinkel wdkbl zwischen den vorgegebenen Schwellen liegt. Bei Turbomotoren ist außerdem noch der Bereich der Ladedruckregelung ausgenommen.

Die Adaption erfolgt durch Integration der Differenz zwischen dem gefilterten Lastsignal tlf und dem korrigierten und gefilterten Nebenlastsignal tlwkf. Mit dem in Figur 1 beschriebenen Verfahren wird sichergestellt, daß die Zeitkonstante des Integrators zdkhax in optimaler Weise variiert. Wie die Zeitkonstante variiert, läßt sich beispielhaft der Darstellung in Figur 4 entnehmen. Der Initialisierungswert für die Zeitkonstante ist der Normalwert ZDKHA. Es ist dies die Zeitkonstante für die langsame Höhenadaption. Kann keine Höhenadaption erfolgen, weil die Umschaltbedingung Bha nicht erfüllt ist, wird die Zeitkonstante zdkhax langsam erhöht, beispielsweise mit der Rate DZDKHAP. Damit wird sichergestellt, daß bei der nächstfolgenden Adaption schneller adaptiert werden kann. Es wird damit der Fehler, der sich aufgrund verhinderter Adaption angesammelt hat, möglichst schnell ausgeglichen.

Kann die Adaption stattfinden, ist also die Bedingung Bha erfüllt, wird die Zeitkonstante zdkhax wiederum schnell vermindert beispielsweise mit der Rate DZDKHAN, da nach dem Ausgleich der angesammelten Fehler mit der normalen also mit der langsamen Zeitkonstante für die Höhenadaption ZDKHA adaptiert werden soll. Hierdurch wird erreicht, daß kurzzeitige Unterschiede zwischen den beiden Lastsignalen also zwischen dem Hauptlastsignal und dem Nebenlastsignal, wie sie im Dynamikfall typisch sein können, nicht zu einer Verstimmung des Höhenfaktors fdkha führen.

Während des Schubbetriebes und bei erkannter Höhe, wenn also der Adaptionsfaktor für die Drosselklappenwinkeladaption fdkha <1 ist, steigt der Adaptionsfaktor mit der Rate DFDKHA. Hierdurch wird erreicht, daß bei langer Bergabfahrt im Schub, während der also keine Adaption möglich ist, der Höhenfaktor in Richtung auf eine geringere Höhe korrigiert wird. Da dies nur eine grobe Schätzung sein kann, ist es sinnvoll, den Wert DFDKHA so einzustellen, daß bei einer Bergabfahrt mit minimalen Gefälle, bei dem gerade noch SA erreicht und eine Adaption verhindert wird, die richtige Anpassung des Höhenfaktors erfolgt.

Eine zusätzliche Schwellwertabfrage des unbegrenzten Faktors dient zur Plausibilitätsprüfung der Lastsignal-Nebenlastsignal-Adaption. Bei Unterschreiten des unteren Grenzwertes FDDKHAU bzw. bei Überschreiten des oberen Grenzwertes FDDKHAO wird auf Fehler in der Adaption erkannt, es ist dann die Bedingung Ele Fehler in der Lasterfassung erfüllt. Ursache dafür kann ein fehlerhaftes Hauptlastsignal tlf des Heißfilmluftmassenmessers oder ein fehlerhaftes Nebenlastsignal tlwkf sein, wenn beispielsweise das Drosselklappenpotentiometer oder der Bypasssteller defekt sind.

Das Verfahren, nach dem die Höhenadaption im Steuergerät der Brennkraftmaschine durchgeführt wird, arbeitet letztendlich mit zwei applizierbaren Zeitkonstanten für den Integrator, in dem die Abweichung zwischen dem Hauptlastsignal und dem Nebenlastsignal bei möglicher Adaption stattfindet. Diese Zeitkonstante ist nach oben und unten begrenzt, die Grenzwerte für die aktuell gültige Zeitkonstante sind in Speichern des Steuergerätes abgelegt.

Nach langer Fahrzeit im Adaptionsbereich arbeitet das Verfahren mit der langsamen Zeitkonstante. Bei Verlassen des Adaptionsbereiches wird über eine vorgebbare Rampe kontinuierlich die Zeitkonstante in Richtung des schnelleren Grenzwertes verstellt. Damit wird die Zeitkonstante um so schneller, je länger man sich außerhalb des Adaptionsbereiches befindet.

Wird vom Steuergerät erkannt, daß ein Wiedereintritt in den Adaptionsbereich erfolgt ist, wird die Zeitkonstante für den Integrator wieder über eine weitere applizierbare Rampe in Richtung langsame Zeitkonstante verstellt. Diese Rampe wird deutlich schneller appliziert als die Rampe in Richtung schnelle Zeitkonstante. Ein möglicher zeitlicher Verlauf für die Zeitkonstante ist der in Figur 4 dargestellte.

Mit dieser Einstellung für die Zeitkonstante ist die Zeitkonstante abhängig von der Zeit, in der sich die Brennkraftmaschine außerhalb des Adaptionsbereiches befunden hat. Ein größerer Zeitanteil außerhalb des Adaptionsbereiches ermöglicht bei entsprechendem Fahrprofil das Zurücklegen einer größeren Höhendifferenz mit einem damit verbundenen größeren Höhenfehler. Dieser Höhenfehler ist noch nicht korrigiert, da kein Adaptionsbereich vorgelegen hat. Es ist deshalb erforderlich, daß eine schnelle Adaption erfolgt, sobald eine Adaption möglich ist. Die dann schnellere Zeitkonstante bei erneuter Adaption bewirkt gerade das gewünschte schnelle Lernen der neuen Höhe.

Wird vom Steuergerät ein Verlassen des Adaptionsbereiches erkannt, wird der zuletzt gelernte Wert für den Höhenfaktor abgespeichert und für weitere Korrekturen des Nebenlastsignales verwendet. Bei langer Fahrzeit außerhalb des Adaptionsbereiches kann bei entsprechendem Fahrprofil, also bei entsprechend langem Ansteigen oder Abfallen der Straße eine Höhendifferenz zurückgelegt werden, die nicht gelernt wurde. Bei Funktionen, die auf die korrekte Höheninformation angewiesen sind, kann es dann zu Fehlfunktionen kommen, da der in den Funktionsablauf eingerechnete Höhenfaktor nicht der tatsächlichen Höhe entspricht. Aus diesem Grund wird zusätzlich ein Gültigkeitsflag eingeführt. Es wird also angezeigt, ob der gelernte und abgespeicherte Höhenfaktor noch richtig ist. Befindet sich die Brennkraftmaschine lange Zeit außerhalb des Adaptionsbereiches, wird die Anzeige (FLAG) zurückgesetzt. Als Maß für die Zeit, in der sich die Brennkraftmaschine außerhalb des Adaptionsbereiches befindet, kann ein Vergleich zwischen der aktuell gültigen Zeitkonstante mit den Grenzwerten für die Zeitkonstante durchgeführt werden.

Die Anzeige wird üblicherweise gesetzt, wenn die langsame Zeitkonstante verwendet wird. Dies ist der Fall, wenn die aktuelle Höhe korrekt gelernt ist. Weiterhin ist Voraussetzung, daß sich die Brennkraftmaschine innerhalb des Adaptionsbereiches befindet und kein Fehler bei der Lasterfassung aufgetreten ist. Wird der Adaptionsbereich verlassen, bleibt die Anzeige (FLAG) solange gesetzt, bis die Zeitkonstante zu ihrem schnellen Grenzwert verändert wurde. Dieser Zeitpunkt wird so gewählt, daß der dann maximal mögliche Fehler nicht zu unerlaubten Betriebszuständen führt.

Wird der Adaptionsbereich bei erkanntem Leerlauf bzw. bei kleiner Fahrzeuggeschwindigkeit verlassen, bleibt das FLAG gesetzt, da in diesem Fall keine Veränderung der Höhe zu erwarten ist.

## Patentansprüche

1. Einrichtung zur Lasterfassung mit Höhenadaption mit einem ersten Lastsensor, der ein höhenabhängiges Hauptlastsignal abgibt und weiteren Sensormitteln, aus deren Ausgangssignal ein höhenunabhängiges Nebenlastsignal erzeugt wird, mit einer Auswerteeinrichtung, die das Hauptlastsignal und das Nebenlastsignal bei vorgebbaren Bedingungen miteinander vergleicht, dadurch gekennzeichnet, daß das Vergleichsergebnis in einem Integrator mit zeitabhängig veränderbarer Zeitkonstante aufintegriert wird und die Höhenadaption ausgehend von den erhaltenen Integrationswerten erfolgt.

2. Einrichtung nach Anspruch 1, dadurch gekennzeichnet, daß die Auswerteeinrichtung das Steuergerät einer Brennkraftmaschine ist, daß der erste Lastsensor ein Luftmassenmesser ist und die weiteren Sensormitteln wenigstens einen Drehzahlsensor und einen Drosselklappengeber umfassen.

3. Einrichtung nach Anspruch 1 oder 2, dadurch gekennzeichnet, daß die zeitabhängig veränderbare Zeitkonstante des Integrators bei Verlassen des Adaptionsbereiches über eine vorgebbare Rampe kontinuierlich in Richtung des schnelleren Grenzwertes verstellt wird.

4. Einrichtung nach einem der vorhergehenden Ansprüche, dadurch gekennzeichnet, daß bei Wiedereintritt in den Adaptionsbereich die zeitabhängig veränderbare Zeitkonstante über eine zweite einstellbare Rampe in Richtung langsamer Zeitkonstante verstellt wird.

5. Einrichtung nach Anspruch 4, dadurch gekennzeichnet, daß die zweite Rampe deutlich schneller ist als die erste Rampe.

6. Einrichtung nach einem der Ansprüche 3 bis 5, dadurch gekennzeichnet, daß die zeitabhängig veränderbare Zeitkonstante des Integrators in Abhängigkeit von der Zeit, in der sich die Brennkraftmaschine außerhalb des Adaptionsbereiches befunden hat und keine Adaption durchgeführt wurde, eingestellt wird.

7. Einrichtung nach einem der vorhergehenden Ansprüche, dadurch gekennzeichnet, daß bei Verlassen des Adaptionsbereiches der zuletzt gelernte Wert abgespeichert und für weitere Auswertungen verwendet wird.

8. Einrichtung nach einem der vorhergehenden Ansprüche, dadurch gekennzeichnet, daß Plausibilitätsuntersuchungen durchgeführt werden, insbesonders Vergleiche zwischen dem Hauptlastsignal und dem Nebenlastsignal und bei zu großen Abweichungen zwischen diesen Signalen eine Fehleranzeige erfolgt.

9. Einrichtung nach einem der vorhergehenden Ansprüche, dadurch gekennzeichnet, daß das Ausgangssignal des Integrators auf Plausibilität überprüft wird und ein Fehler erkannt wird, wenn dieses Signal nicht innerhalb eines vorgebbaren Bereiches liegt.

10. Einrichtung nach einem der vorhergehenden Ansprüche, dadurch gekennzeichnet, daß das Ausgangssignal des Integrators entweder direkt oder nach einer geeigneten Begrenzung als Adaptionsfaktor verwendet wird.

11. Einrichtung nach Anspruch 10, dadurch gekennzeichnet, daß der Adaptionsfaktor (fdkha) zur Drosselklappen-Höhenadaption oder zur Anpassung der Abgasrückführrate verwendet wird.

## Claims

1. Device for load detection with height adaptation having a first load sensor which emits a height-dependent main load signal, and further sensor means from whose output signal a height-independent auxiliary load signal is produced, having an evaluation device which compares the main load signal and the auxiliary load signal with one another in conditions which can be predetermined, characterized in that the comparison result is integrated in an integrator with a time constant which can be varied as a function of time, and the height adaptation is carried out on the basis of the integration values obtained.

2. Device according to Claim 1, characterized in that the evaluation device is the controller of an internal combustion engine, in that the first load sensor is an air mass flowmeter, and the further sensor means comprise at least one rotation speed sensor and one throttle valve transmitter.

3. Device according to Claim 1 or 2, characterized in that the integrator time constant which can be varied as a function of time is continuously changed in the direction of the faster limit value, via a ramp which can be predetermined, on leaving the adaptation range.

4. Device according to one of the preceding claims, characterized in that, on re-entering the adaptation range, the time constant which can be varied as a function of time is changed in the direction of a slow time constant via a second adjustable ramp.

5. Device according to Claim 4, characterized in that the second ramp is considerably faster than the first ramp.

6. Device according to one of Claims 3 to 5, characterized in that the integrator time constant which can be varied as a function of time is set as a function of the time in which the internal combustion engine has being outside the adaptation range and no adaptation has been carried out.

7. Device according to one of the preceding claims, characterized in that, on leaving the adaptation range, the value learnt last is stored, and is used for further evaluations.

8. Device according to one of the preceding claims, characterized in that plausibility checks are carried out, in particular comparisons between the main load signal and the auxiliary load signal, and, if the discrepancies between these signals are excessive, a fault indication is produced.

9. Device according to one of the preceding claims, characterized in that the output signal from the integrator is checked for plausibility, and a fault is identified if this signal is not within a range which can be predetermined.

10. Device according to one of the preceding claims, characterized in that the output signal from the integrator is used as an adaptation factor, either directly or after suitable limiting.

11. Device according to Claim 10, characterized in that the adaptation factor (fdkha) is used for throttle-valve height adaptation or for adaptation of the exhaust-gas feedback rate.

## Revendications

1. Dispositif pour détecter une charge avec adaptation altimétrique, comprenant un premier capteur de charge fournissant un signal principal de charge dépendant de l'altitude et d'autres moyens de détection qui fournissent un signal de sortie à partir duquel on génère un signal auxiliaire indépendant de l'altitude, ainsi qu'une installation d'exploitation qui compare le signal principal de charge et le signal auxiliaire de charge, l'un avec l'autre, dans des conditions prédéterminées,
caractérisé en ce que
le résultat de la comparaison est intégré dans un intégrateur avec une constante de temps variable en fonction du temps et l'adaptation altimétrique se fait à partir des valeurs d'intégration obtenues.

2. Dispositif selon la revendication 1,
caractérisé en ce que
l'installation d'exploitation est l'appareil de commande d'un moteur à combustion interne,
- le premier capteur de charge est un débitmètre massique d'air et
- les autres moyens de détection comprennent au moins un capteur de vitesse de rotation et un capteur de volet d'étranglement.

3. Dispositif selon la revendication 1 ou 2,
caractérisé en ce que
la constante de temps, variable en fonction du temps de l'intégrateur, est réglée lorsqu'on quitte la plage d'adaptation, selon une rampe prédéterminée de manière continue dans le sens des valeurs limites plus rapides.

4. Dispositif selon l'une des revendications précédentes,
caractérisé en ce que
lorsqu'on pénètre de nouveau dans la plage d'adaptation, la constante de temps variable en fonction du temps est réglée dans la direction des constantes de temps lentes par une seconde rampe réglable.

5. Dispositif selon la revendication 4,
caractérisé en ce que
la seconde rampe est significativement plus rapide que la première.

6. Dispositif selon l'une des revendications 3 à 5,
caractérisé en ce que
la constante de temps variable en fonction du temps, de l'intégrateur, est réglée en fonction du temps pendant lequel le moteur à combustion interne s'est trouvé à l'extérieur de la plage d'adaptation et qu'il n'y a pas eu d'adaptation.

7. Dispositif selon l'une quelconque des revendications précédentes,
caractérisé en ce qu'
on enregistre la dernière valeur apprise en quittant la plage d'adaptation et on l'utilise pour les autres exploitations.

8. Dispositif selon l'une quelconque des revendications précédentes,
caractérisé en ce qu'
on effectue des examens de plausibilité, notamment des comparaisons entre le signal principal de charge et le signal auxiliaire de charge et on affiche une erreur si des différences entre ces signaux sont trop grandes.

9. Dispositif selon l'une quelconque des revendications précédentes,
caractérisé en ce qu'
on vérifie la plausibilité du signal de sortie de l'intégrateur et on estime qu'il y a une erreur si ce signal n'est pas à l'intérieur d'une plage prédéterminée.

10. Dispositif selon l'une quelconque des revendications précédentes,
caractérisé en ce qu'
on utilise comme coefficient d'adaptation, le signal de sortie de l'intégrateur, soit directement, soit après une limitation appropriée.

11. Dispositif selon la revendication 10,
caractérisé en ce qu'
on utilise le coefficient d'adaptation (fdkha) soit pour adapter à l'altitude le volet d'étranglement, soit pour adapter le taux de réinjection des gaz d'échappement.
